# EUROPEAN PATENT APPLICATION

(11) **EP 2 141 687 A1**
(43) Date of publication of application: **06.01.2010**
(21) Application number: 08740788.8
(22) Date of filing: 23.04.2008
(51) Int. Cl.: G09G 3/36, G02F 1/133, G09G 3/20, G09G 3/34

(54) **BACKLIGHT APPARATUS, BACKLIGHT CONTROL METHOD, AND LIQUID CRYSTAL DISPLAY DEVICE**

(30) Priority: 23.04.2007 JP 2007112904
(71) Applicant: Sony Corporation, Tokyo 108-0075 (JP)
(72) Inventor: MIZUTA, Minoru, Tokyo 108-0075 (JP); KOJIMA, Kazuo, Tokyo 108-0075 (JP); ITO, Yasushi, Tokyo 108-0075 (JP)
(74) Representative: Thévenet, Jean-Bruno
(86) International application number: PCT/JP2008/057799
(87) International publication number: WO 2008/133258

(57) **Abstract**

The present invention relates to a backlight device, a backlight control method, and a liquid crystal display device that allow light-emission brightness or chromaticity to be corrected with high accuracy and low cost.

A light source controller controlling a backlight causes processing to be sequentially performed for all the blocks SA-a(1) to (16) in a correction area SA-a. The processing includes setting an area SA-a of four areas SA-a to SA-d as a correction area and causing light emission in a block SA-a(1), which is a block in the correction area SA-a, and light emission in blocks SA-b(n) to SA-d(n) which are located in the three areas SA-b to SA-d other than the correction area SA-a and whose positions in the areas correspond to the block SA-a(n) to be sequentially performed. Then, the light source controller repeats similar operations for the remaining three areas SA-b to SA-d as correction areas.

The present invention is applicable to, for example, a backlight of a liquid crystal display device or the like.

## Description

### Technical Field

The present invention relates to a backlight device, a backlight control method, and a liquid crystal display device, and in particular, to a backlight device, a backlight control method, and a liquid crystal display device that allow light-emission brightness or chromaticity to be corrected with high accuracy and low cost.

### Background Art

A liquid crystal display device (LCD (Liquid crystal display)) is constituted by a liquid crystal panel including a color filter substrate having colors of red, green, and blue, a liquid crystal layer, and the like, a backlight placed on the back surface of the liquid crystal panel, and the like.

In a liquid crystal display device, the twist of liquid crystal molecules in a liquid crystal layer is controlled by changing voltage, and light (white light) from a backlight transmitted through the liquid crystal layer in accordance with the twist of the liquid crystal molecules becomes red, green, or blue light by passing through the color filter substrate having colors of red, green, or blue. Accordingly, an image is displayed.

Note that, in the following description, controlling the twist of liquid crystal molecules by changing voltage so that the transmittance of light can be changed, is called control of a liquid crystal aperture ratio. In addition, the brightness of light emitted from a backlight, which is a light source, is called "light-emission brightness", and the brightness of light emitted from the front surface of a liquid crystal panel, which is the brightness of light perceived by a viewer who visually recognizes a displayed image, is called "display brightness".

In liquid crystal display devices, control has been performed in such a manner that a necessary display brightness can be achieved in each pixel of the screen by illuminating, with a backlight, the entire screen of a liquid crystal panel at a uniform and maximum (substantially maximum) brightness and controlling only the aperture ratio of each pixel of the liquid crystal panel. Thus, for example, a problem has occurred in which a large amount of power is consumed even when a dark image is displayed since a backlight emits light at the maximum backlight brightness.

With respect to this problem, for example, techniques for realizing reduced power consumption and an extended dynamic range of display brightness by dividing a screen into a plurality of blocks and changing the backlight brightness for each divided block in accordance with an input image signal, have been suggested (see, for example, Patent Documents 1 and 2.)

In order to perform control in such a manner that the backlight brightness is changed for each divided block in accordance with an input image signal, it is necessary to correct, for each divided block, the light-emission brightness and chromaticity when a backlight is turned on.

As a method for correcting the light-emission brightness and chromaticity for each block, feedback control is generally performed, in which a predetermined number of sensors for detecting light-emission brightness or chromaticity are provided for a light-emission area and correction is performed in accordance with the light-emission brightness or chromaticity detected by each of the sensors.

Patent Document 1: Japanese Unexamined Patent Application Publication No. 2005-17324
Patent Document 2: Japanese Unexamined Patent Application Publication No. 11-109317

### Disclosure of Invention

### Technical Problem

In such feedback control, how many sensors are to be provided within a light-emission area is an issue. That is, when a large number of sensors are provided for a light-emission area so that a range within which a single sensor performs detection can become as small as possible, the measurement accuracy increases, and more accurate control of light-emission brightness or chromaticity can be achieved. However, the cost of the device increases.

Meanwhile, when a small number of sensors, such as one or two sensors, are provided for the entire light-emission area, although correction for the entire light-emission area can be performed, correction in units of blocks becomes difficult. Thus, irregularity of light-emission brightness or chromaticity within the light-emission area occurs.

The present invention has been made in view of the situation described above, and allows light-emission brightness or chromaticity to be corrected with high accuracy and low cost.

### Technical Solution

A backlight device according to a first aspect of the present invention that has a light-emission area in which N (≥ 1) small areas each including one or more blocks and serving as units for which light-emission brightness or chromaticity is corrected are provided and in which M (≥ 2) areas constituted by the N small areas are adjacent to each other and that is capable of controlling the light-emission brightness for each block, includes light-emission control means for causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area; and detecting means for detecting the light-emission brightness or chromaticity of the detection area, the detecting means being provided in the M areas on a one-to-one basis.

The light-emission control means can cause the light emission in the detection area and the light emission in the corresponding small areas within the areas other than the correction area to be performed during a sensing period provided prior to or subsequent to light-emission brightness control based on an input image signal.

The small areas can each include one block. The backlight device can further include current control means for controlling a current value to be supplied to a light-emitting element in the block. The current control means can cause, to a light-emitting element in a block for which the detecting means cannot perform detection with the same current value as a current value supplied at the time of the light-emission brightness control based on the input image signal, a current value greater than the current value supplied at the time of the light-emission brightness control to be supplied.

The light emission in each of the small areas can be caused to be performed at a frequency of 60 Hz or more.

A backlight control method according to a first aspect of the present invention for a backlight device that has a light-emission area in which N (≥ 1) small areas each including one or more blocks and serving as units for which light-emission brightness or chromaticity is corrected are provided and in which M (≥ 2) areas constituted by the N small areas are adjacent to each other, that includes detecting means for detecting the light-emission brightness or chromaticity, the detecting means being provided in the M areas on a one-to-one basis, and that is capable of controlling the light-emission brightness for each block, includes the step of causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area, and detecting the light-emission brightness or chromaticity of the detection area.

A liquid crystal display device according to a second aspect of the present invention including a backlight that has a light-emission area in which N (≥ 1) small areas each including one or more blocks and serving as units for which light-emission brightness or chromaticity is corrected are provided and in which M (≥ 2) areas constituted by the N small areas are adjacent to each other and that is capable of controlling the light-emission brightness for each block, includes light-emission control means for causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area; and detecting means for detecting the light-emission brightness or chromaticity of the detection area, the detecting means being provided in the M areas on a one-to-one basis.

The light-emission control means can cause the light emission in the detection area and the light emission in the corresponding small areas within the areas other than the correction area to be performed during a sensing period provided prior to or subsequent to light-emission brightness control based on an input image signal.

The small areas can each include one block. The backlight device can further include current control means for controlling a current value to be supplied to a light-emitting element in the block. The current control means can cause, to a light-emitting element in a block for which the detecting means cannot perform detection with the same current value as a current value supplied at the time of the light-emission brightness control based on the input image signal, a current value greater than the current value supplied at the time of the light-emission brightness control to be supplied.

The light emission in each of the small areas can be caused to be performed at a frequency of 60 Hz or more.

In the first and second aspects of the present invention, processing is caused to be performed for all the M areas. The processing includes setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area. In this processing, the light-emission brightness or chromaticity of the detection area is detected.

### Advantageous Effects

According to the present invention, correction of light-emission brightness or chromaticity can be performed with high accuracy and low cost.

### Brief Description of Drawings

[Fig. 1] Fig. 1 is an illustration showing an example of the configuration of an embodiment of a liquid crystal display device to which the present invention is applied.
[Fig. 2] Fig. 2 is an illustration showing the detailed configuration of a backlight.
[Fig. 3] Fig. 3 is an illustration showing the detailed configuration of a correction unit area of the backlight.
[Fig. 4] Fig. 4 is an illustration for explaining the position of a sensing period in a 4-frame time period.
[Fig. 5] Fig. 5 is an illustration for explaining the order of lighting of blocks at the time of brightness correction.
[Fig. 6] Fig. 6 is an illustration for explaining the details of the sensing period.
[Fig. 7] Fig. 7 is an illustration showing lighting of individual blocks at the time of brightness correction.
[Fig. 8] Fig. 8 is an illustration showing lighting of individual blocks at the time of brightness correction.
[Fig. 9] Fig. 9 is a functional block diagram of a backlight and a light source controller.
[Fig. 10] Fig. 10 is a flowchart for explaining a backlight control process.
[Fig. 11] Fig. 11 is an illustration for explaining a reduction in the level of a light reception signal in accordance with the distance from a sensor.
[Fig. 12] Fig. 12 is an illustration for explaining a reduction in the level of a light reception signal in accordance with the distance from a sensor.
[Fig. 13] Fig. 13 is an illustration for explaining a change in the current value supplied to a block distant from the sensor.
[Fig. 14] Fig. 14 is an illustration for explaining extension of a correction area in a case where the supplied current value is changed.
[Fig. 15] Fig. 15 is an illustration for explaining a change in an LED caused by a deterioration with the lapse of time.
[Fig. 16] Fig. 16 is an illustration for explaining a change in an LED caused by a deterioration with the lapse of time.
[Fig. 17] Fig. 17 is an illustration for explaining a change in an LED caused by a deterioration with the lapse of time.

### Explanation of Reference Numerals

1 liquid crystal display device, 12 backlight, 13 control unit, 32 light source controller, 51 control part, 61 calculator, 62 timing controller, SR sensor, B block, SA area, LA correction unit area

### Best Modes for Carrying Out the Invention

Hereinafter, embodiments of the present invention will be explained with reference to the drawings.

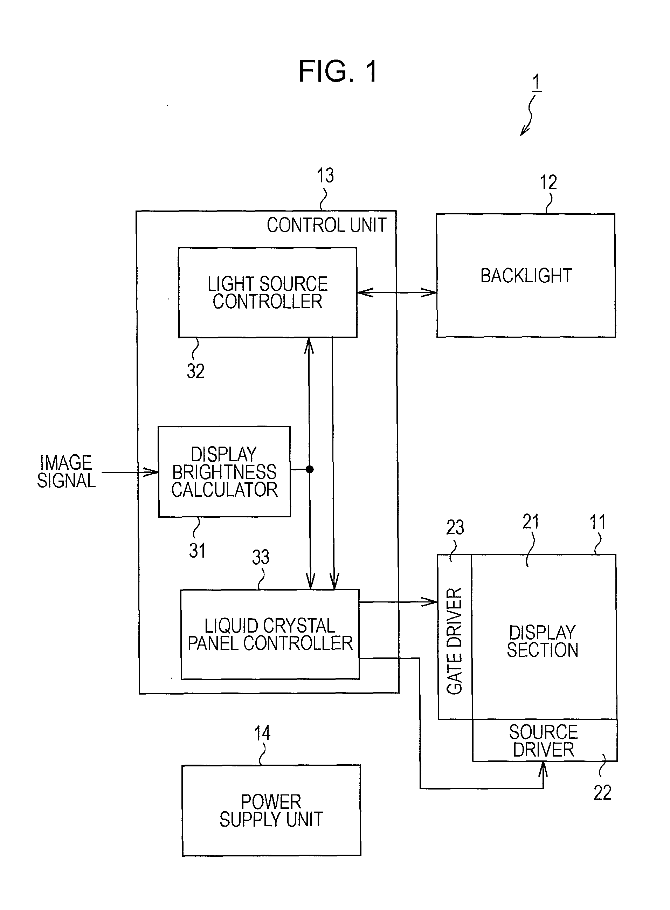

Fig. 1 shows an example of the configuration of an embodiment of a liquid crystal display device to which the present invention is applied.

A liquid crystal display device 1 shown in Fig. 1 is constituted by a liquid crystal panel 11 including a color filter substrate having colors of red, green, and blue, a liquid crystal layer, and the like; a backlight 12 placed on the back surface of the liquid crystal panel 11; a control unit 13 that controls the liquid crystal panel 11 and the backlight 12; and a power supply unit 14.

The liquid crystal display device 1 displays an original image corresponding to an image signal in a predetermined display area (an area corresponding to a display section 21 of the liquid crystal panel 11). Note that an input image signal input to the liquid crystal display device 1 corresponds to, for example, an image with a frame rate of 60 Hz (hereinafter, referred to as a frame image), and in the following description, 1/60 seconds is called a 1-frame time period.

The liquid crystal panel 11 is constituted by the display section 21 in which a plurality of apertures through which white light from the backlight 12 is transmitted are arranged, and a source driver 22 and a gate driver 23 that output driving signals to transistors (TFTs: Thin Film Transistors), which are not illustrated, provided for individual apertures in the display section 21.

White light transmitted through an aperture of the display section 21 is converted, with a color filter formed on the color filter substrate, which is not illustrated, into red, green, or blur light. A set of three apertures through which red, green, and blue light beams are emitted corresponds to one pixel of the display section 21.

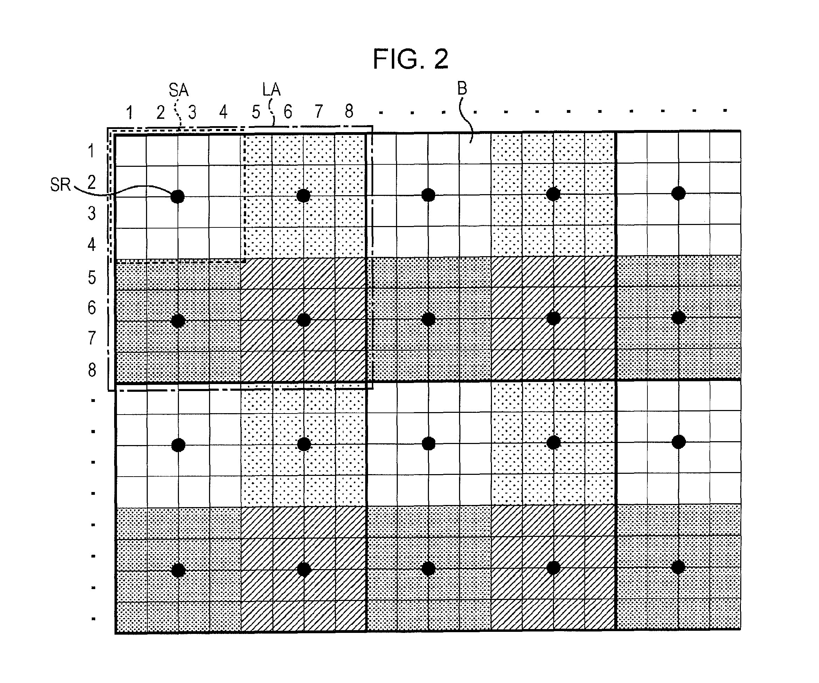

The backlight 12 emits white light in a light-emission area corresponding to the display section 21. The light-emission area of the backlight 12 is divided into a plurality of blocks (areas) and lighting is controlled for individual divided blocks, as described later with reference to Fig. 2.

The control unit 13 is constituted by a display brightness calculator 31, a light source controller 32, and a liquid crystal panel controller 33.

An image signal corresponding to each frame image is supplied from an external device to the display brightness calculator 31. The display brightness calculator 31 calculates the distribution of brightnesses of a frame image from the supplied image signal, and calculates necessary display brightness for each block in accordance with the distribution of brightnesses of the frame image. The calculated display brightness is supplied to the light source controller 32 and the liquid crystal panel controller 33.

The light source controller 32 calculates the backlight brightness of each block in accordance with the display brightness of the block supplied from the display brightness calculator 31. Then, by performing PWM (Pulse Width Modulation) control, the light source controller 32 controls each block of the backlight 12 so that the calculated backlight brightness can be obtained. Controlling the light-emission brightness (backlight brightness) of the backlight 12 in accordance with an input image signal will be called normal PWM control.

In addition, the light source controller 32 also performs light-emission control (hereinafter, referred to as sensing control, in an appropriate manner) for correcting light-emission brightness or chromaticity in accordance with the light-emission brightness or chromaticity of each block detected by a sensor SR (Fig. 2) provided in the backlight 12.

Here, the sensor SR is an illuminance sensor or a color sensor. Note that in the following description, for simple explanation, an example in which sensors SR provided in the backlight 12 are illuminance sensors and the light-emission brightness of individual blocks is corrected by sensing control will be explained. However, similar processing can be performed for a case where the chromaticity of each bock is corrected. In addition, both light-emission brightness and chromaticity may be corrected.

The backlight brightness of each block calculated by the light source controller 32 is supplied to the liquid crystal panel controller 33.

The liquid crystal panel controller 33 calculates the liquid crystal aperture ratio of each pixel in the display section 21 in accordance with the display brightness of each block supplied from the display brightness calculator 31 and the backlight brightness of each block supplied from the light source controller 32. Then, the liquid crystal panel controller 33 supplies a driving signal to the source driver 22 and the gate driver 23 of the liquid crystal panel 11 so that the calculated liquid crystal aperture ratio can be achieved, and performs driving control of a TFT in each pixel of the display section 21.

The power supply unit 14 supplies predetermined power to each unit of the liquid crystal display device 1.

Fig. 2 shows the detailed configuration of the backlight 12. Note that Fig. 2 illustrates only part of the light-emission area of the backlight 12. In addition, outside numbers in Fig. 2 are illustrated for explanation, and those numbers are not part of the backlight 12.

The smallest square grids shown in Fig. 2 represent blocks B, which are control units of the light-emission brightness of the backlight 12. In each block B, one or more set of LEDs (Light Emitting Diodes) serving as light-emitting elements which emit red, green, and blue lights are provided.

Note that blocks B are obtained by virtually diving the light-emission area of the backlight 12, not by physically dividing the light-emission area using partition boards or the like. Thus, light emitted from a light-emitting element provided in a block B is diffused by a diffusion plate, which is not illustrated, and is applied not only to the front side of the block B but also to the front side of blocks near the block B.

In the backlight 12, an area SA is constituted by four blocks in the horizontal direction (lateral direction in the drawing) and four blocks in the vertical direction (longitudinal direction in the drawing), that is, 4 x 4, sixteen blocks B. In Fig. 2, individual areas SA are illustrated using different patterns. Furthermore, a correction unit area LA is formed of an area in which 2 x 2 areas SA are arranged in the horizontal and vertical directions. Thus, in the light-emission area of the backlight 12, the areas SA and the correction unit areas LA are arranged in a repeated manner in the horizontal and vertical directions.

The sensors SR are provided in the areas SA on the one-to-one basis. An area SA is the largest area for which a sensor SR can perform detection with the same current value as a current value supplied when normal PWM control is performed, that is, when light-emission brightness is controlled in accordance with an input image signal. A sensor SR is placed at the center of an area SA.

The light source controller 32 performs the same sensing control for individual correction unit areas LA in a parallel manner. Hereinafter, sensing control for a single correction unit area LA will be explained. Obviously, normal PWM control for controlling light-emission brightness in accordance with an input image signal is control for each block B.

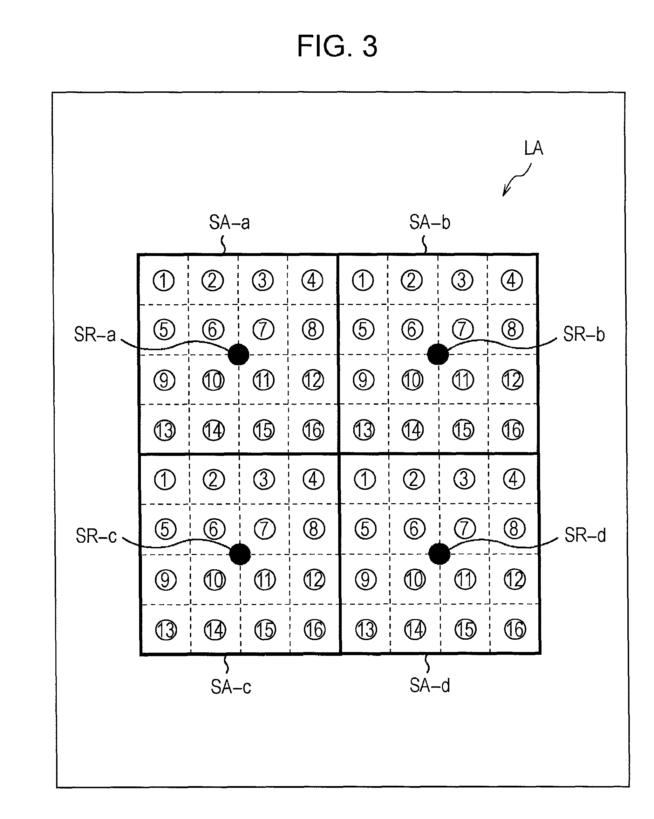

Fig. 3 is an illustration showing the detailed configuration of a correction unit area LA.

A correction unit area LA includes 2 x 2 areas SA, as described above. In a case where individual areas SA within the correction unit area LA need to be distinguished from each other, an area SA located in an upper left portion of the correction unit area LA is called an area SA-a, an area SA located in an upper right portion of the correction unit area LA is called an area SA-b, an area SA located in a lower left portion of the correction unit area LA is called an area SA-c, and an area SA located in a lower right portion of the correction unit area LA is called an area SA-d. Similarly, in a case where sensors SR provided at the center of the areas SA-a, SA-b, SA-c, and SA-d need to be distinguished from each other, they are called sensors SR-a, SR-b, SR-c, and SR-d.

In addition, in a case where sixteen blocks B within the area SA-a are distinguished from each other, they are called blocks SA-a(1) to SA-a(16). Similarly, in a case where blocks B in the areas SA-b, SA-c, and SA-d are distinguished from each other, they are called blocks SA-b(1) to SA-b(16), blocks SA-c(1) to SA-c(16), and blocks SA-d(1) to SAd(16).

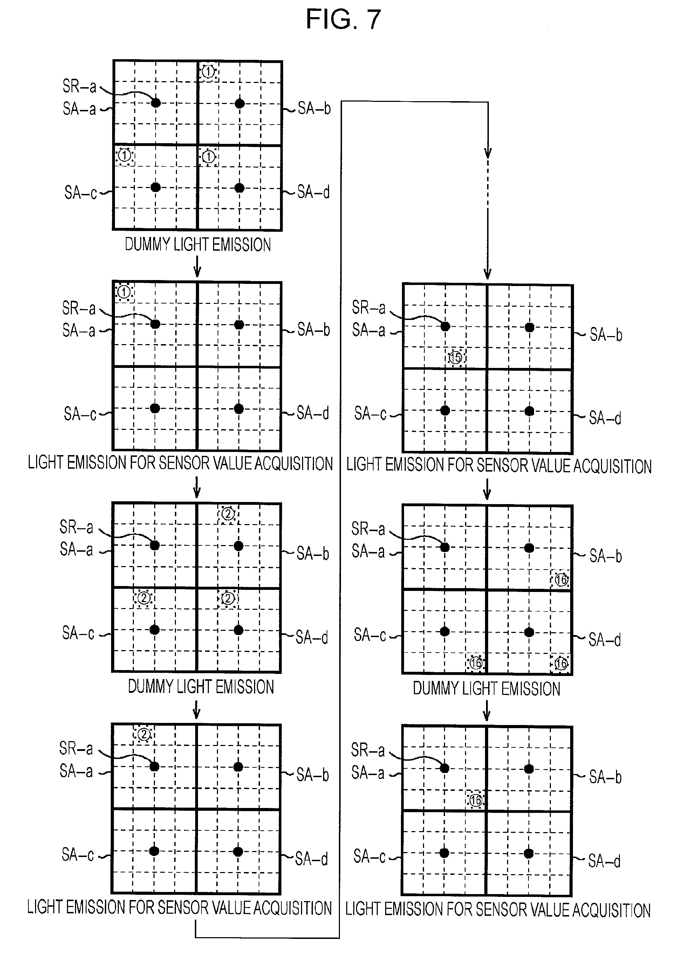

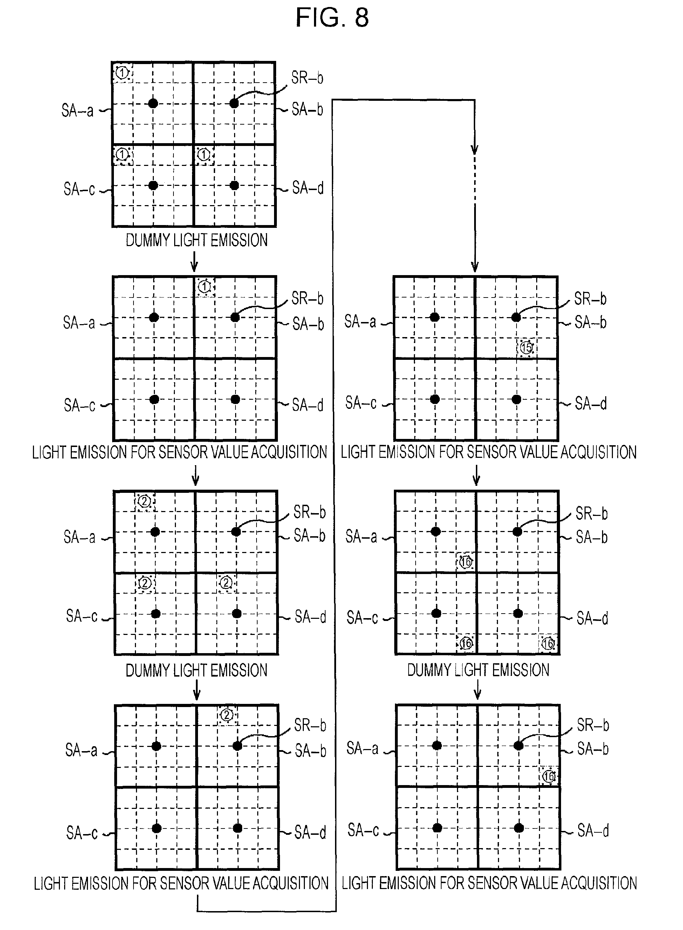

Note that in Fig. 3, individual block numbers of the blocks SA-a(1) to SA-a(16), the blocks SA-b(1) to SA-b(16), the blocks SA-c(1) to SA-c(16), and the blocks SA-d(1) to SAd(16) are illustrated as encircled numbers (numbers surrounded by circles) in the corresponding blocks B. The same applies to Figs. 7 and 8, which will be described later.

The light source controller 32 performs a single sensing control operation for the correction unit area LA within a 4-frame time period.

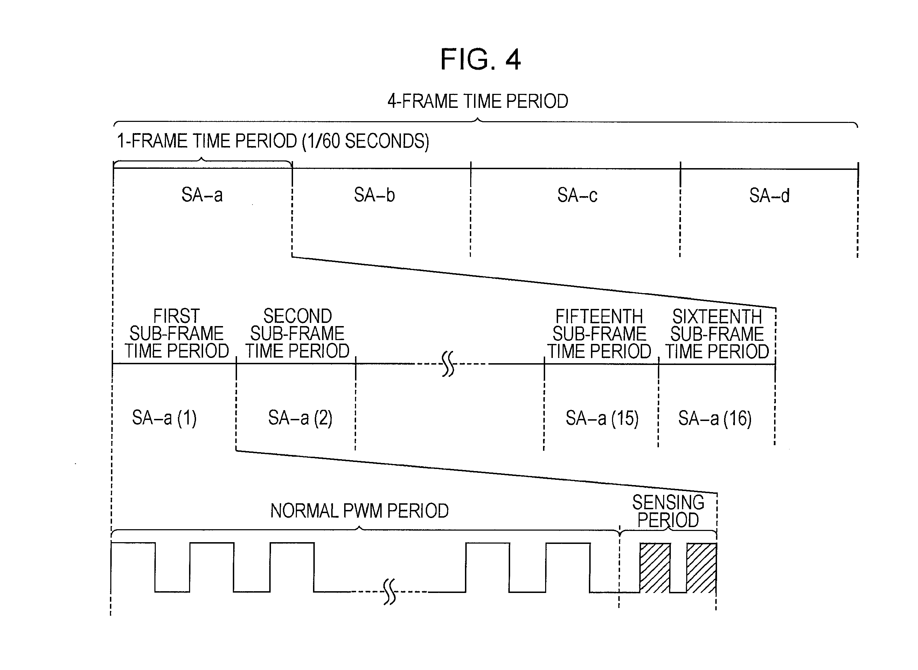

Thus, as shown in Fig. 4, the light source controller 32 performs sensing control for the area SA-a within the first 1-frame time period of a 4-frame time period, performs sensing control for the area SA-b within the next 1-frame time period, performs sensing control for the area SA-c within the next 1-frame time period, and performs sensing control for the area SA-d within the last 1-frame time period.

A 1-frame time period is constituted by sixteen sub-frame time periods. For example, within the first 1-frame time period, the light source controller 32 sequentially performs sensing control for the sixteen blocks SA-a(1) to SA-a(16), each for a 1-sub-frame time period. Thus, the length of a 1-sub-frame time period is one-sixteenth the length of a 1-frame time period (1/60 seconds), that is, 1/960 seconds.

Sensing control is performed between normal PWM control operations. For example, after a period during which normal PWM control is performed (hereinafter, referred to as a normal PWM period, in an appropriate manner) within a 1-sub-frame time period, a period during which sensing control is performed (hereinafter, referred to as a sensing period, in an appropriate manner) is provided. Note that the sensing period may be provided before the normal PWM period.

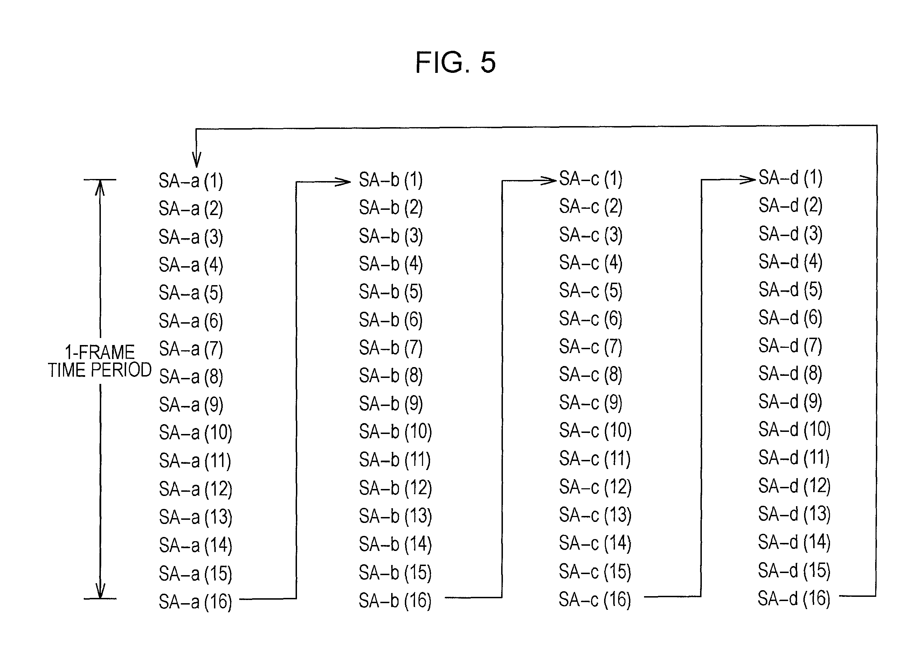

Thus, in the correction unit area LA, the order of blocks B for which light-emission brightness is corrected is as shown in Fig. 5.

Light-emission brightness is corrected in the order of the blocks SA-a(1) to SA-a(16), the blocks SA-b(1) to SA-b(16), the blocks SA-c(1) to SA-c(16), and the blocks SA-d(1) to SA-d(16). After correction for the block SA-d(16) is completed, correction for the block SA-a(1) is performed again. Here, a time period during which blocks B arranged in a single line in Fig. 5 are processed corresponds to a 1-frame time period.

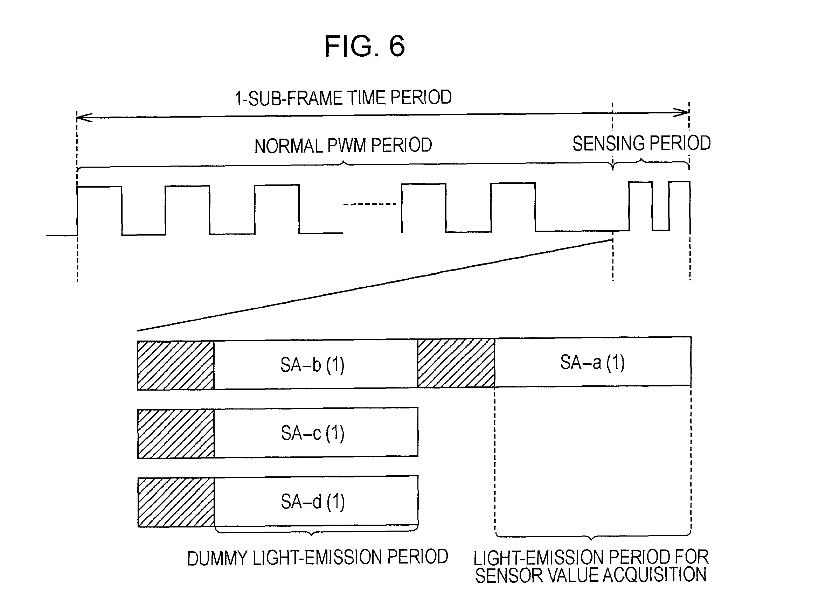

Fig. 6 shows the detailed configuration of the first 1-sub-frame time period within a 4-frame time period, that is, a sub-frame time period during which the light-emission brightness of the block SA-l(1) is corrected.

During a sub-frame time period corresponding to the block SA-a(1), in a sensing period, light emission in the block SA-a(1) to be corrected and light emission in the blocks SA-b(1), SA-c(1), and SA-d(1) which are located in the three areas SA-b, SA-c, and SA-d other than the area SA-a in the correction unit area LA and whose positions in the areas SA-b, SA-c, and SA-d correspond to the block SA-a(1) are sequentially performed.

Note that although an example in which light emission in the blocks SA-b(1), SA-c(1), and SA-d(1) is performed prior to light emission in the block SA-a(1) is shown in Fig. 6, the order of light emission may be reversed.

A period (time) during which light emission in the blocks SA-b(1), SA-c(1), and SAd(1) is performed is a so-called dummy light-emission period during which a value (sensor value) is not acquired using the SR-a although lighting is performed. The subsequent period during which light emission in the block SA-a(1) is performed is a light-emission period for sensor value acquisition for acquiring a sensor value using the sensor SR-a.

In Fig. 6, a period provided prior to the dummy light-emission period and a period provided prior to the light-emission period for sensor value acquisition, the periods being represented by oblique lines, are blank periods provided for eliminating the influence of previous light emission.

Each of the dummy light-emission period and the light-emission period for sensor value acquisition is set to be as short as possible within a range capable of acquiring a sufficiently stable sensor value. It is desirable that, for example, a time period shorter than or equal to 5% of a 1-sub-frame time period is set. This is because when the dummy light-emission period and the light-emission period for sensor value acquisition are set to be longer, the proportion of the sensing period in a 1-sub-frame time period increases, and the average light-emission brightness of the entire backlight 12 reduces.

Thus, by setting the dummy light-emission period and the period for sensor value acquisition to be as short as possible within a range capable of acquiring a sufficiently stable sensor value, a reduction in the average light-emission brightness of the entire backlight 12 can be suppressed. In other words, even in a case where light-emission brightness due to normal PWM control is extremely low, an increase in the light-emission brightness due to light emission in sensing control can be minimized.

During the light-emission period for sensor value acquisition within the sensing period shown in Fig. 6, light emission is performed only in the block SA-a(1) in the correction unit area LA. Light-emission is performed only in the block SA-a(1) in order to eliminate the influence of light emission in peripheral blocks B and to obtain an accurate light-emission brightness of the block SA-a(1) since each block B obtained by dividing the backlight 12 is not obtained by physical division using a partition board or the like, as described above.

In addition, during the dummy light-emission period, light emission is performed only in the blocks SA-b(1), SA-c(1), and SA-d(1) within the correction unit area LA. Light emission in the blocks SA-b(1), SA-c(1), and SA-d(1) is performed in order to prevent human eyes from recognizing light emission for brightness correction as flicker, as described later.

Figs. 7 and 8 are illustrations showing lighting of individual blocks B within a correction unit area LA in a case where only a sensing period is focused on.

First, the area SA-a of the correction unit area LA is set as an area to be corrected (hereinafter, referred to as a correction area, in an appropriate manner). As described above with reference to Fig. 6, dummy light-emission is performed in the blocks SA-b(1), SA-c(1), and SA-d(1), and then, light emission for sensor value acquisition is performed in the block SA-a(1). The sensor SR-a within the correction area SA-a receives light emitted from the block SA-a(1). Next, dummy light-emission is performed in the blocks SA-b(2), SA-c(2), and SA-d(2). Then, light emission for sensor value acquisition is performed in the block SA-a(2), and the sensor SR-a receives light emitted from the block SA-a(2).

Similarly, light emission is sequentially performed. Light emission for sensor value acquisition is performed until the block SA-a(16), and the sensor SR-a receives light emitted from the block SA-a(16).

Next, the area SA-b within the correction unit area LA is set as a correction area. As shown in Fig. 8, dummy light emission is performed in the blocks SA-a(1), SA-c(1), and SAd(1). Then, light emission for sensor value acquisition is performed in the block SA-b(1). The sensor SR-b within the correction area SA-b receives light emitted from the block SA-b(1). Next, dummy light-emission is performed in the blocks SA-a(2), SA-c(2), and SA-d(2). Then, light emission for sensor value acquisition is performed in the block SA-b(2), and the sensor SR-b receives light emitted from the block SA-b(2).

Similarly, light emission is sequentially performed. Light emission for sensor value acquisition is performed until the block SA-b(16), and the sensor SR-b receives light emitted from the block SA-b(16).

Next, the area SA-c and the area SA-d are sequentially set as correction areas, and similar dummy light emission and light emission for sensor value acquisition are performed.

Thus, for example, the number of times lighting is performed in the block SA-a(1) for correction of light-emission brightness within a 4-frame time period is four in total, one light emission operation for sensor value acquisition and three dummy light emission operations. That is, the frequency of lighting when control other than normal PWM control is performed for the block SA-a(1) is (4/60 seconds)/4 = 1/60 (seconds/times) = 60 Hz since four light emission operations are performed during a 4-frame time period (4/60 seconds), and human eyes do not recognize light emission for brightness correction as flicker.

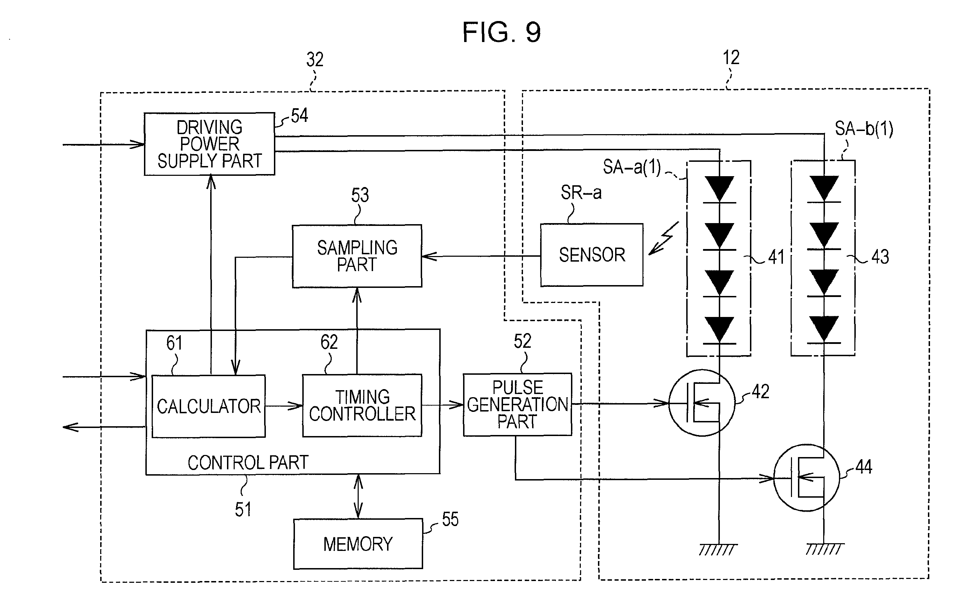

Fig. 9 is a functional block diagram of the backlight 12 and the light source controller 32 in a case where correction of light-emission brightness is performed for the block SA-a(1).

In the block SA-a(1) of the backlight 12, LEDs 41 serving as light-emitting elements that emit red, green, and blue light are provided. One end (anode side) of the LEDs 41 is connected to a driving power supply part 54 of the light source controller 32, and the other end (cathode side) of the LEDs 41 is connected to a switching element 42 constituted by, for example, an FET (Field Effect Transistor) or the like.

Similarly, in the block SA-b(1) of the backlight 12, LEDs 43 serving as light-emitting elements that emit red, green, and blue light are provided. One end (anode side) of the LEDs 43 is connected to the driving power supply part 54 of the light source controller 32, and the other end (cathode side) of the LEDs 43 is connected to a switching element 44. Since the blocks SA-c(1) and SA-d(1) are similar to the block SA-b(1), illustration is omitted.

The switching element 42 or 44 functions as a switch for causing a current to flow to the LEDs 41 or 43 when a signal (pulse signal) at a predetermined level is supplied from a pulse generation part 52. When a current is supplied to the LEDs 41 or 43, the LEDs 41 or 43 emit light. The sensor SR-a converts (A-D converts) the amount of light received from the LEDs 41 of the block SA-a(1) into a digital signal, and supplies the converted light reception signal to a sampling part 53.

The light source controller 32 is constituted by a control part 51, the pulse generation part 52, the sampling part 53, the driving power supply part 54, and a memory 55.

The control part 51 includes a calculator 61 and a timing controller 62. The calculator 61 calculates the backlight brightness of the block SA-a(1) based on display brightness supplied from the display brightness calculator 31, and supplies the calculated backlight brightness to the timing controller 62. In addition, the calculator 61 supplies, to the driving power supply part 54, a power supply control signal for controlling the values of currents supplied to the LEDs 41 and the LEDs 43. In the calculator 61, the values of currents supplied to the LEDs 41 and the LEDs 43 are corrected when necessary in accordance with a light reception signal supplied from the sampling part 53. That is, in the calculator 61, feedback control of backlight brightness corresponding to changes in light-emission brightness, such as time-lapse deterioration and temperature change, is performed. Note that correction for a brightness change may be performed by changing the pulse width of PWM, changing the number of pulses of PWM, or the like, instead of changing the value of a supplied current.

The timing controller 62 supplies, to the pulse generation part 52, a pulse control signal for controlling the pulse width (duty ratio) of a pulse signal, the pulse interval, and the like in accordance with the backlight brightness calculated by the calculator 61. In addition, the timing controller 62 supplies, to the sampling part 53, a timing signal representing a timing at which a light reception signal is acquired (sampled) from the sensor SR-a.

The pulse generation part 52 generates a pulse signal based on the pulse control signal, and supplies the generated pulse signal to the switching elements 42 and 44. The sampling part 53 performs sampling in accordance with the timing signal, and supplies a light reception signal, which is obtained by sampling, to the calculator 61. The driving power supply part 54 supplies a predetermined current value to the LEDs 41 and 43 in accordance with the power supply control signal supplied from the calculator 61. The power of the driving power supply part 54 is supplied from the power supply unit 14 of Fig. 1. The memory 55 stores predetermined data necessary for control.

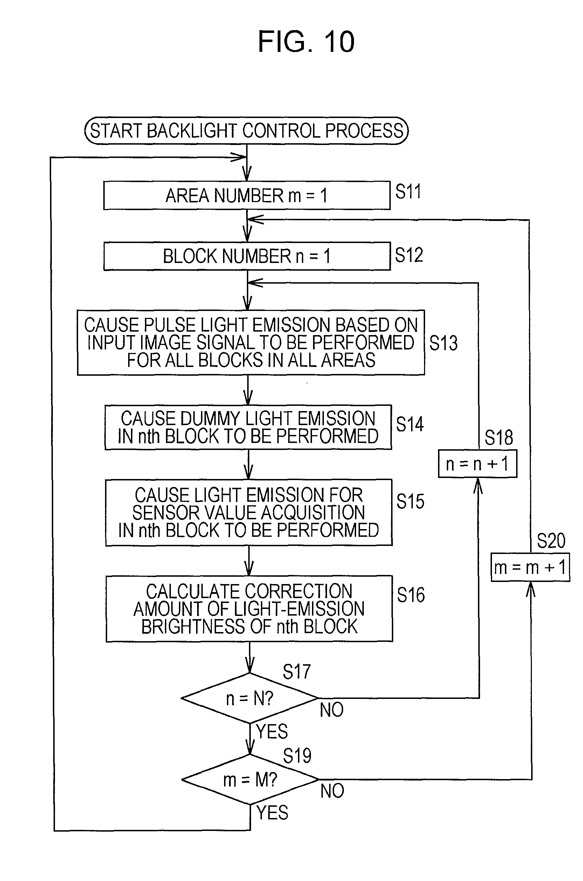

Next, a backlight control process by the light source controller 32 for a single correction unit area LA will be explained with reference to a flowchart of Fig. 10. This process starts when the display brightness of each block B is supplied from the display brightness calculator 31 to the light source controller 32.

First, in step S11, the control part 51 substitutes 1 for the area number m (m = 1, 2, ···, M), which is a variable for determining a correction area from among four areas SA in the correction unit area LA. In the correction unit area LA, m = 1 corresponds to the area SA-a, m = 2 corresponds to the area SA-b, m = 3 corresponds to the area SA-c, and m = 4 corresponds to the area SA-d. Thus, in the correction unit area LA, the area SA-a is first set as a correction area.

In step S12, the control part 51 substitutes 1 for the block number n (n = 1, 2, ···, N), which is a variable for distinguishing individual blocks B constituting each area SA in the correction unit area LA from each other.

In step S13, the control part 51 causes pulse light emission corresponding to an input image signal to be performed in all the blocks B in all the areas SA (that is, the areas SA-a, SA-b, SA-c, and SA-d). That is, this processing is processing performed during a normal PWM period within a 1-sub-frame time period.

In step S14, the control part 51 causes dummy light emission to be performed in the nth bock in the correction area. For example, in a case where the correction area is the area SA-a, the control part 51 causes dummy light emission to be performed in the blocks SA-b(n), SA-c(n), and SA-d(n). This processing is processing performed during a dummy light-emission period within a 1-sub-frame time period.

In step S15, the control part 51 causes light emission for sensor value acquisition to be performed in the nth bock in the correction area. For example, in a case where the correction area is the area SA-a, the control part 51 causes light emission for sensor value acquisition to be performed in the block SA-a(n). Then, the sensor SR-a shares, with the sampling part 53, a light reception signal when light emission for sensor value acquisition in the block SA-a(n) is received. This processing is processing performed during a light-emission period for sensor value acquisition within a 1-sub-frame time period.

In step S16, the control part 51 calculates the amount of correction of light-emission brightness of the nth block in the correction area in accordance with the light reception signal from the sensor SR. For example, in a case where the correction area is the area SA-a, the control part 51 calculates a difference from a desired value of the light-emission brightness of the block SA-a(n) in accordance with the light reception signal supplied from the sampling part 53, and calculates the correction amount corresponding to the calculated difference. The calculated correction amount is stored in the memory 55 and fed back when light emission control is performed for the block SA-a(n) next time. Note that the desired value of the light-emission brightness of the block SA-a(n) is also stored in advance in the memory 55.

In step S17, the control part 51 determines whether or not the block number n is the same as the number N (= 16) of blocks in the area SA.

In a case where it is determined in step S17 that the block number n is not the same as the number N of blocks in the area SA, that is, the block number n is smaller than the number N of blocks, the process proceeds to step S18. In step S18, the block number n is incremented by one by the control part 51, and the process returns to step S13.

Meanwhile, in a case where it is determined in step S17 that the block number n is the same as the number N of blocks in the area SA, that is, light emission for sensor value acquisition has been performed for all the blocks B in the current correction area, the process proceeds to step S19. In step S19, the control part 51 determines whether or not the area number m is the same as the number M (= 4) of areas in the correction unit area LA.

In a case where it is determined in step S19 that the area number m is not the same as the number M of areas in the correction unit area LA, that is, light emission for sensor value acquisition has not been performed for all the areas SA-a to SA-d in the correction unit area LA, the process proceeds to step S20. In step S20, the area number m is incremented by one by the control part 51, and the process returns to step S12. Accordingly, the next area SA is set as a correction area.

Meanwhile, in a case where it is determined in step S19 that the area number m is the same as the number M of areas in the correction unit area LA, that is, light emission for sensor value acquisition has been performed for all the areas SA-a to SA-d in the correction unit area LA, the process returns to step S11. Then, the processing of steps S11 to S20 is performed again.

The process of Fig. 10 is repeatedly performed until supply of an input image signal from an external device to the liquid crystal display device 1 is completed.

As described above, in the liquid crystal display device 1 in Fig. 1, in the case of correcting the light-emission brightness of a predetermined block B in a correction area SA within a correction unit area LA, in a state where only the block B to be corrected in the correction unit area LA is lit and the other blocks B are not lit, light is received at a sensor SR and the correction amount of light-emission brightness is calculated in accordance with the amount of received light. Thus, the light-emission brightness of the lit block B can be measured with high accuracy and corrected.

In addition, the sensor SR is provided for each area SA, which is the largest area for which detection can be performed with the same current value as a current value supplied when light-emission brightness is controlled in accordance with an input image signal. Accordingly, the minimum necessary number of sensors SR can be provided. Thus, the production cost of the backlight 12 (the liquid crystal display device 1) can be reduced.

That is, according to the liquid crystal display device 1, correction of light-emission brightness can be performed with high accuracy and low cost.

Furthermore, since the lighting frequency of each block B at the time of correcting brightness is set to 60 Hz, light emission for brightness correction is prevented from being recognized as flicker by human eyes.

A method for correcting light-emission brightness by performing correction of light-emission or chromaticity only when a display image is dark at a scene change or the like and thus reducing the influence of light emission for brightness correction on the display image, has been available. However, in this method, there is a problem in which it is difficult to correct chromaticity changing in several seconds due to a temperature change or the like.

Obviously, in the backlight control process described above, by using a color sensor not an illuminance sensor as the sensor SR, correction of chromaticity can also be performed with high accuracy and high efficiency. Since an operation for correcting the chromaticity of each block B can be performed for each 4-frame time period (4/60 seconds), correction of chromaticity changing in several seconds can also be performed.

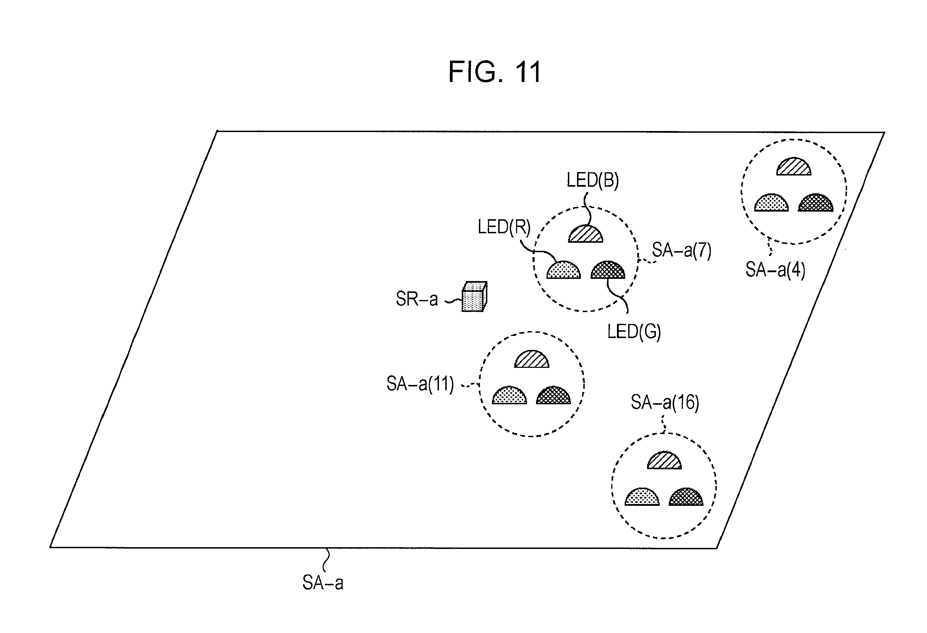

The sensor SR is provided for each area SA, which is the largest area for which detection can be performed with the same current value as a current value supplied when light-emission brightness is controlled in accordance with an input image signal. The amount of light received at the sensor SR is inversely proportional to distance. Thus, for example, as shown in Fig. 11, although a light reception signal at high level can be acquired in the blocks SA-a(7) and SA-a(11), which are close to the sensor SR-a of the correction area SA-a, the signal level in the blocks SA-a(4) and SA-a(16), which are distant from the sensor SR-a, is reduced even if light is emitted at the same light-emission brightness as the blocks SA-a(7) and SA-a(11).

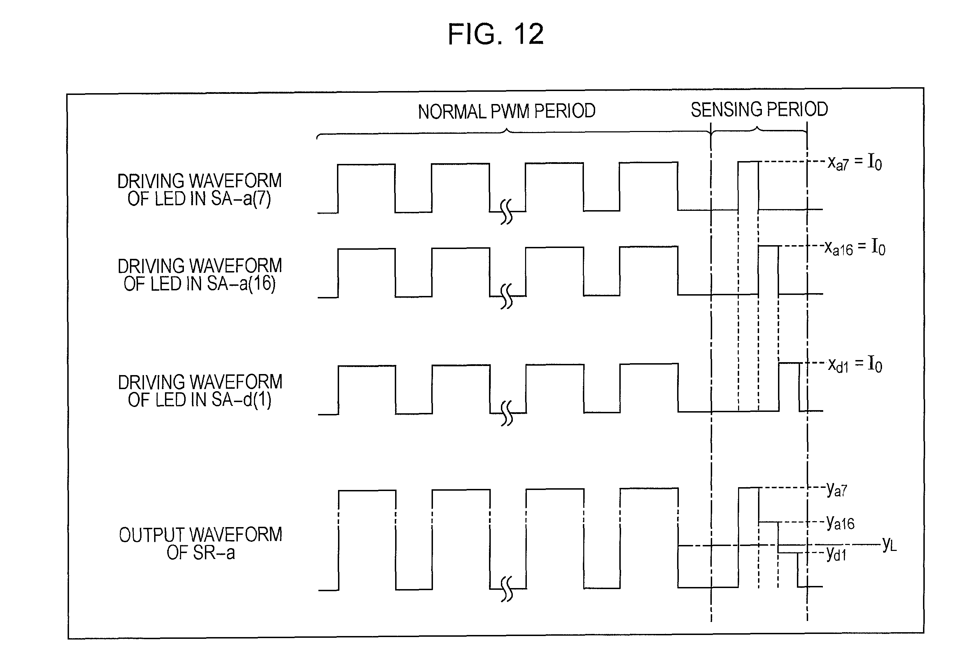

More detailed explanation will be given with reference to Fig. 12.

Fig. 12 shows driving waveforms (waveforms of current values) supplied to LEDs in the block SA-a(7) near the sensor SR-a and in the block SA-a(16) distant from the sensor SR-a within the correction area SA-a, a driving waveform supplied to LEDs in the block SAd(1) outside the correction area SA-a, which is further distant from the sensor SR-a than the block SA-a(16), and the output waveform of the sensor SR-a.

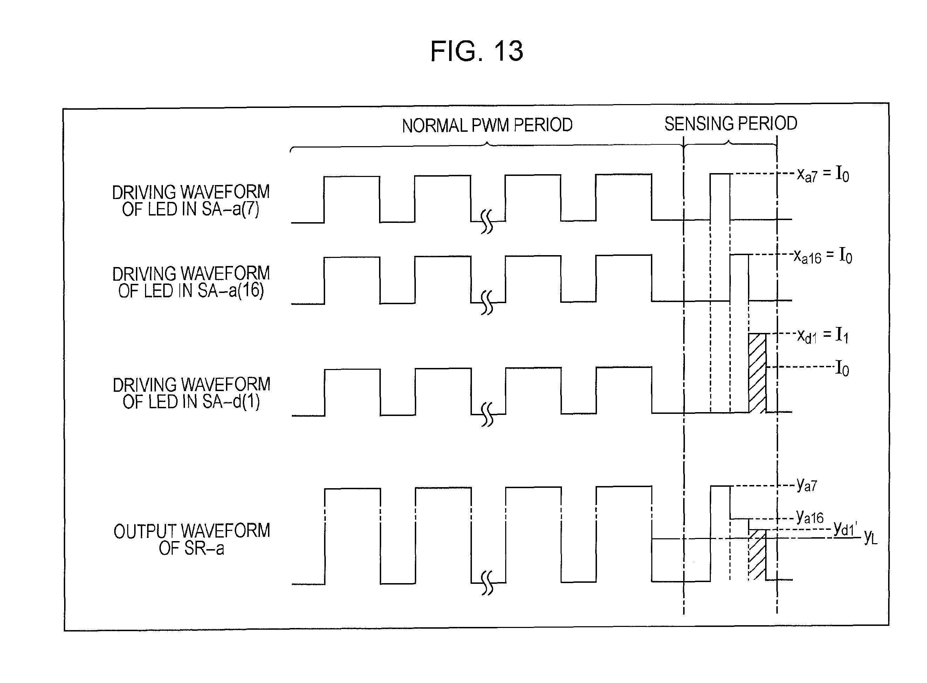

In Fig. 12, the lateral direction represents a time axis, and the longitudinal direction represents the level of a waveform (signal).
Note that, originally, a light-emission timing during a sensing period is the same throughout the blocks SA-a(7), SA-a(16), and SA-d(1), as shown in Fig. 4. However, in Fig. 12, for simple explanation by comparison, the light-emission timings for these blocks are different. The same applies to Fig. 13, which will be described later.

In the backlight control process described above, a current value Xₐ₇ supplied to the LEDs in the block SA-a(7), a current value Xₐ₁₆ supplied to the LEDs in the block SA-a(16), and a current value X_{d1} supplied to the LEDs in the block SA-d(1) are the same current value I₀.

In addition, the level of the output waveform of the sensor SR-a when light is received from the block SA-a(7) near the sensor SR-a exhibits a value yₐ₇, and the level of the output waveform of the sensor SR-a when light is received from the block SA-a(16), which is distant from the sensor SR-a, exhibits a value yₐ₁₆, which is lower than the value yₐ₇ and equal to or higher than the lowest level y_{L} necessary for performing correction.

Meanwhile, the level of the output waveform of the sensor SR-a when light is received from the block SA-d(1) outside the correction area SA-a exhibits a value y_{d1}, which is lower than the lowest level y_{L}. Thus, the light-emission brightness of the block SA-d(1) outside the correction area SA-a cannot be corrected using the sensor value of the sensor SR-a, and the sensor SR-d is used for the block SA-d(1).

As shown by providing oblique lines in Fig. 13, the light source controller 32 of the liquid crystal display device 1 sets the current value X_{d1} supplied to the LEDs in the block SA-d(1) to a current value I₁, which is greater than the current value I₀ supplied to the LEDs in the blocks SA-a(7) and SA-a(16). In this case, the level of the output waveform of the sensor SR-a when light is received from the block SA-d(1) exhibits a value y_{d1}', which is equal to or higher than the lowest level y_{L}. Thus, the amount of received light necessary for correction can be acquired by the sensor SR-a.

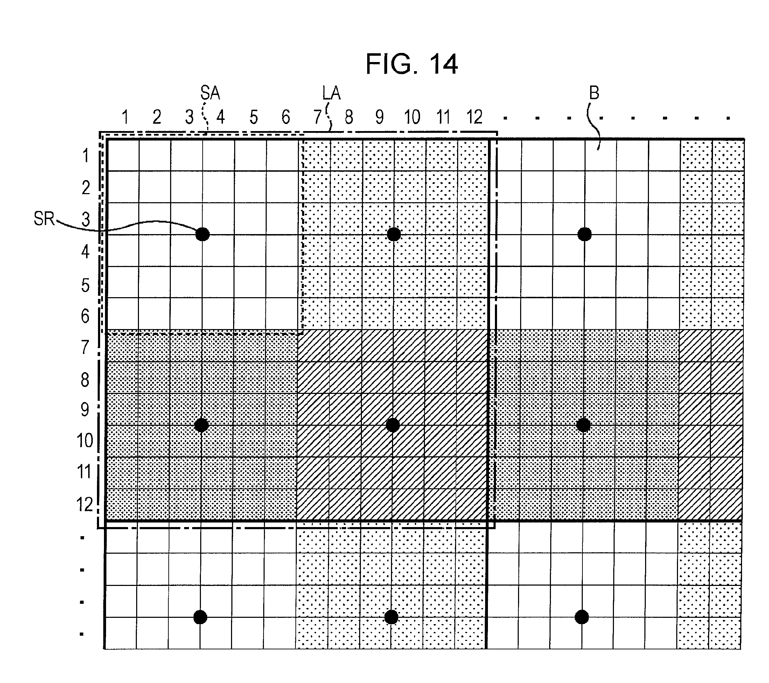

As described above, by supplying, to LEDs in a block B for which the level of a light reception signal with the current value I₀ at the time of normal PWM control is lower than or equal to the lowest level y_{L} since the block B is distant from the sensor SR-a, the current value I₁ which is greater than the current value I₀ supplied to LEDs in a block B near the sensor SR-a, an area SA for which a sensor SR performs detection for brightness correction can be extended, for example, to include 6 x 6 blocks, that is, 36 blocks, as shown in Fig. 14. Accordingly, the number of sensors SR in the entire backlight 12 can be reduced. Thus, correction of light-emission brightness or chromaticity can be performed with lower cost and more efficiency. Alternatively, if the number of blocks B for which one sensor SR is provided is the same, an inexpensive sensor SR having a smaller light reception area can be used. Thus, correction of light-emission brightness or chromaticity can be performed with lower cost and more efficiency.

Note that when an area SA includes 36 block units, a 1-frame time period is divided into 36 sub-frame time periods. Thus, a 1-sub-frame time period in this case is different from a 1-sub-frame time period in a case where 16 blocks constitute an area SA.

In the example described above, an example in which a current value supplied only to a block B for which the level of a sensor SR is lower than or equal to the lowest level y_{L} is changed has been explained. However, since the level of the sensor SR is reduced in accordance with distance, a current value supplied at the time of brightness correction (during a sensing period) even to an LED in a block B for which the level of the sensor SR is equal to or higher than the lowest level y_{L} with the current value I₀ at the time of normal PWM control may be increased in accordance with the distance from the sensor SR.

In a case where a current value supplied to an LED is changed for each block B, it is necessary to acquire in advance the relationship between a supplied current value If and a light-emission brightness L, the relationship representing the light-emission brightness (level of an output waveform) when a certain current value is supplied to the LED, and to store the acquired relationship in the memory 55. Then, the light source controller 32 performs comparison with the light-emission brightness in the initial state, which is stored in the memory 55, and corrects the supplied current value I₀ during a normal PWM period.

By not only storing the relationship between the supplied current value If and the light-emission brightness L for each block but also storing the relationship between the supplied current value If and the applied voltage value Vf to an LED in the memory 55, a factor that influences on a change in the light-emission brightness or chromaticity of the LED can be guessed to some extent.

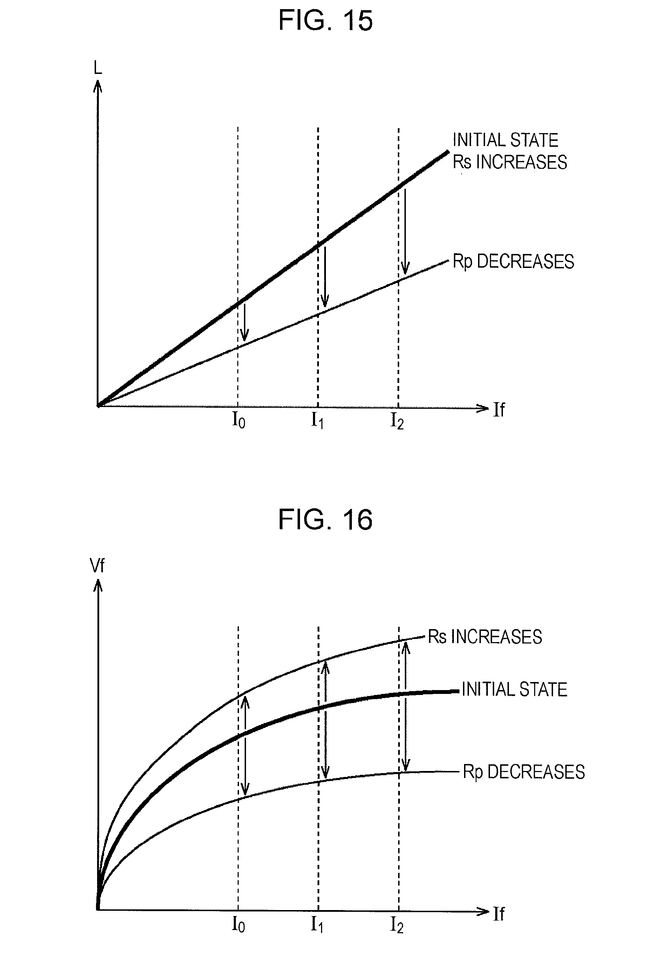

More specifically, as shown in Fig. 15, the light-emission brightnesses L when the supplied current values I₀, I₁, I₂, and the like are set for an LED in a predetermined block B are measured in advance.

In addition, as shown in Fig. 16, the applied voltage values Vf when the supplied current values I₀, I₁, I₂, and the like are set for an LED in a predetermined block B are measured in advance.

Then, the relationship between the current value If and the light-emission brightness L and the relationship between the current value If and the applied voltage value Vf, which are represented by thick lines in Figs. 15 and 16, are stored as the initial state in the memory 55.

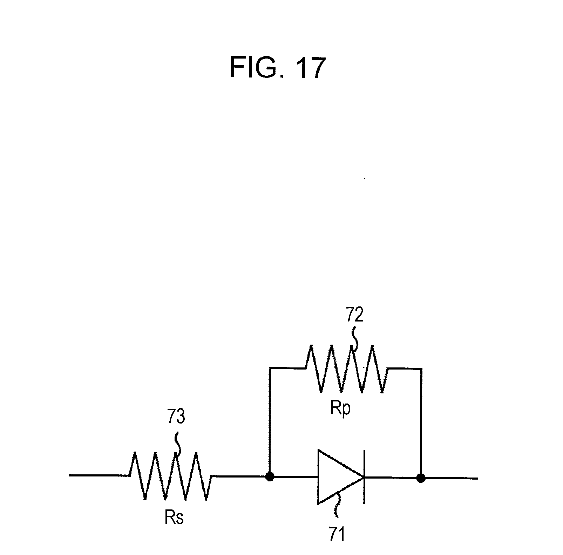

In general, an LED is regarded as an equivalent circuit constituted by an LED 71, an equivalent parallel resistor 72 which is connected in parallel to the LED 71, and an equivalent series resistor 73 which is connected in series to the LED 71, as shown in Fig. 17. Here, the resistance of the equivalent parallel resistor 72 is denoted by Rp, and the resistance of the equivalent series resistor 73 is denoted by Rs.

In a case where both the light-emission brightness L and the applied voltage value Vf become lower than the initial state after a predetermined time has passed when the current values supplied to an LED are set to I₀, I₁, and I₂, as shown in Figs. 15 and 16, the resistance Rp of the equivalent parallel resistor 72 can be regarded as being reduced by deterioration with the lapse of time.

Meanwhile, in a case where the light-emission brightness L is not changed from the initial state and the applied voltage value Vf becomes higher than the initial state when the current values supplied to an LED are set to I₀, I₁, and I₂, the resistance Rs of the equivalent series resistor 73 can be regarded as being increased by deterioration with the lapse of time.

In addition, in a case where the applied voltage value Vf is not changed from the initial state and the light-emission brightness L becomes lower than the initial state when the current values supplied to an LED are set to I₀, I₁, and I₂, the influence of an external factor such as a lens can be guessed.

In actuality, since it is considered that the above-described three types of change are not independent and characteristics are established by the combination of these types of change, the ratio among "a change in the resistance Rp of the equivalent parallel resistor 72", "a change in the resistance Rs of the equivalent series resistor 73", and "an external factor" is estimated in accordance with the measured relationship between the current value If and the light-emission brightness L and relationship between the current value If and the applied voltage value Vf, and correction of the light-emission brightness can be performed in accordance with the ratio. That is, the optimal improvement measures against a change in the light-emission brightness caused by the deterioration with the lapse of time, such as a change in a supplied current value, a change in a pulse width, and exchange of LEDs, can be taken.

In the embodiment described above, an example in which brightness correction is performed for each block has been explained. However, brightness correction is not necessarily performed for each block. Brightness correction may be performed for each small area constituted by neighboring some blocks. Thus, the embodiment described above corresponds to an example of a case where one block constitutes a small area. However, for example, brightness correction may be performed for each small area constituted by four block units, such as the block SA-a(1), the block SA-a(2), the block SA-a(5), and the block SA-a(6) in the area SA-a in Fig. 3.

In addition, although an example in which the number N of blocks (small areas) is 16 (N = 16) and the number M of blocks (small areas) constituting an area is 4 (M = 4) has been explained in the above-described embodiment, the numbers of blocks are not limited to the above-described numbers. That is, any numbers can be set as long as the lighting frequency of each block B at the time of brightness correction is equal to or higher than 60 Hz.

In this description, the steps described in the flowchart include not only processing performed in time series in accordance with the written order but also processing performed in parallel or independently, the processing being not necessarily performed in time series.

Embodiments of the present invention are not limited to the embodiments described above. Various changes can be made without departing from the gist of the present invention.

## Claims

1. A backlight device that has a light-emission area in which N (≥ 1) small areas each including one or more blocks and serving as units for which light-emission brightness or chromaticity is corrected are provided and in which M (≥ 2) areas constituted by the N small areas are adjacent to each other and that is capable of controlling the light-emission brightness for each block, the backlight device comprising:
light-emission control means for causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area; and
detecting means for detecting the light-emission brightness or chromaticity of the detection area, the detecting means being provided in the M areas on a one-to-one basis.

2. The backlight device according to Claim 1,
wherein the light-emission control means performs the light emission in the detection area and the light emission in the corresponding small areas within the areas other than the correction area during a sensing period provided prior to or subsequent to light-emission brightness control based on an input image signal.

3. The backlight device according to Claim 2,
wherein the small areas each include one block,
wherein the backlight device further comprises current control means for controlling a current value to be supplied to a light-emitting element in the block, and
wherein the current control means supplies, to a light-emitting element in a block for which the detecting means cannot perform detection with the same current value as a current value supplied at the time of the light-emission brightness control based on the input image signal, a current value greater than the current value supplied at the time of the light-emission brightness control.

4. The backlight device according to Claim 1,
wherein the light emission in each of the small areas is performed at a frequency of 60 Hz or more.

5. A backlight control method for a backlight device that has a light-emission area in which N (≥ 1) small areas each including one or more blocks and serving as units for which light-emission brightness or chromaticity is corrected are provided and in which M (≥ 2) areas constituted by the N small areas are adjacent to each other, that includes detecting means for detecting the light-emission brightness or chromaticity, the detecting means being provided in the M areas on a one-to-one basis, and that is capable of controlling the light-emission brightness for each block, the backlight control method comprising the step of:
causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area, and detecting the light-emission brightness or chromaticity of the detection area.

6. A liquid crystal display device including a backlight that has a light-emission area in which N (≥ 1) small areas each including one or more blocks and serving as units for which light-emission brightness or chromaticity is corrected are provided and in which M (≥ 2) areas constituted by the N small areas are adjacent to each other and that is capable of controlling the light-emission brightness for each block, the liquid crystal display device comprising:
light-emission control means for causing processing to be sequentially performed for all the M areas, the processing including setting one of the M areas as a correction area and causing light emission in a detection area, which is a small area within the correction area, and light emission in small areas which are located in (M-1) areas other than the correction area and whose positions in the areas correspond to the detection area to be sequentially performed for all the small areas in the correction area; and
detecting means for detecting the light-emission brightness or chromaticity of the detection area, the detecting means being provided in the M areas on a one-to-one basis.

7. The liquid crystal display device according to Claim 6,
wherein the light-emission control means performs the light emission in the detection area and the light emission in the corresponding small areas within the areas other than the correction area during a sensing period provided prior to or subsequent to light-emission brightness control based on an input image signal.

8. The liquid crystal display device according to Claim 7,
wherein the small areas each include one block,
wherein the backlight device further comprises current control means for controlling a current value to be supplied to a light-emitting element in the block, and
wherein the current control means supplies, to a light-emitting element in a block for which the detecting means cannot perform detection with the same current value as a current value supplied at the time of the light-emission brightness control based on the input image signal, a current value greater than the current value supplied at the time of the light-emission brightness control.

9. The liquid crystal display device according to Claim 6,
wherein the light emission in each of the small areas is performed at a frequency of 60 Hz or more.
